# EUROPEAN PATENT APPLICATION

(11) **EP 4 365 872 A1**
(43) Date of publication of application: **08.05.2024**
(21) Application number: 23194837.3
(22) Date of filing: 01.09.2023
(51) Int. Cl.: G09B 9/44, G09B 9/18, G09B 9/20, G09B 9/28, G09B 9/30

(54) **METHOD, APPARATUS, AND COMPUTER-READABLE STORAGE MEDIUM FOR SIMULATING AN AERODYNAMIC EVENT ON AN AIRCRAFT DURING FLIGHT**

(30) Priority: 03.11.2022 US 202217980306
(71) Applicant: The Boeing Company, Arlington, VA 22202 (US)
(72) Inventor: ZIMMERMANN, Kelly M, Arlington, 22202 (US); WATSON, Sidney, Arlington, 22202 (US); MOUNT, Bert, Arlington, 22202 (US); SANTIAGO, Luis-Alberto J., Arlington, 22202 (US); LUO, Jia, Arlington, 22202 (US); SHIKANY, David A, Arlington, 22202 (US)
(74) Representative: Boult Wade Tennant LLP

(57) **Abstract**

A method, apparatus, and computer-readable storage medium are disclosed for simulating an event on an aircraft during a flight using a physical flight simulator capable of simulating the flight and the event on the aircraft. The method includes generating executable code including one or more scripts configured to be deployed on the physical flight simulator to simulate one or more aircraft parameters on the aircraft during the event, the one or more aircraft parameters characterizing a current status of the aircraft or systems thereof during the flight. The method further includes a computer processor executing a simulating application to simulate the event. Furthermore, the computer processor is configured to deploy the one or more scripts to output the one or more aircraft parameters to the physical flight simulator, subject to the one or more aircraft parameters, and receive user input in response to the event thereto.

## Description

### BACKGROUND

### Field of the Disclosure

The present disclosure relates to aircraft simulation. More particularly, the present disclosure relates to simulating an event on an aircraft during flight.

### Description of Related Art

Flight simulators have been around since the early 20^{th} century where simple electromechanical devices were used to simulate flight in an aircraft. Early flight simulators focused on just teaching a new pilot how to fly a plane. However, modern flight simulators are more complex just as modern aircraft and their various systems have become even more complex. For example, modern simulators include those designed for simulating various programmable events that occur during flight.

Such programmable events include ballistic impacts, fires, loss of control surfaces, loss of hydraulic systems, loss of wing structure, fuel leaks and the like on an aircraft. Yet, current modern flight simulators cannot accurately simulate aircraft aerodynamics of such events to assess a pilot's reaction to these events and the resulting consequences of the pilot's reactions on aerodynamics of the aircraft.

It would therefore be desirable to have an apparatus and method that takes into account at least some of the issues discussed above, as well as other possible issues.

### BRIEF SUMMARY

The above and other needs are met by examples of the present disclosure which provides a method and apparatus for simulating an event (e.g., ballistic impact) on an aircraft during a flight.

The present disclosure thus includes, without limitation, the following examples.

Some examples provide a method for simulating an event on an aircraft during a flight using a physical flight simulator capable of simulating the flight and the event on the aircraft, the method comprising: generating executable code including one or more scripts configured to be deployed on the physical flight simulator to simulate one or more aircraft parameters on the aircraft during the event, the one or more aircraft parameters characterizing a current status of the aircraft or systems thereof during the flight; and executing a simulating application, via a computer processor configured to access the executable code, to simulate the event on the aircraft during the flight and, at least: deploy the one or more scripts to output the one or more aircraft parameters to the physical flight simulator, subject to the one or more aircraft parameters, and receive user input in response to the event thereto; continuously update the one or more aircraft parameters in response to the user input; and output data, including data characterized by the updated one or more aircraft parameters, for analyzing user reaction to the event.

In some examples, the data output by the computer processor may include a change of a center of gravity of the aircraft during or after the event, the change of the center of gravity of the aircraft being characterized by the updated one or more aircraft parameters.

In some examples, at least one of the one or more aircraft parameters may characterize aerodynamic parameters that simulate an aerodynamic performance of the aircraft during the flight.

In some examples, the computer processor may be configured to: deploy one of the one or more scripts to thereby change the aerodynamic parameters of the aircraft to simulate an impact on the aerodynamic performance, and continuously update the aerodynamic parameters of the aircraft in response to the user input.

In some examples, the aerodynamic parameters may include physical parameters of the aircraft that alter a center of gravity of the aircraft and a simulated condition of: one or both wings of the aircraft, a fuel tank of the aircraft, or a fuselage of the aircraft.

In some examples, the computer processor may be configured to continuously update the aerodynamic parameters includes being configured to update the physical parameters.

In some examples, the computer processor may be configured to output the data and the method may further comprise: comparing, by the computer processor or another computing device to which the computer processor is in communication with, the data to threshold output data that is characterized by one or more threshold aircraft parameters for the event.

Some other examples provide an apparatus for simulating an event on an aircraft during a flight, the apparatus in communication with a physical flight simulator capable of simulating the flight, the apparatus comprising a computer processor and a memory, the computer processor being configured to: access executable code including one or more scripts configured to be deployed on the physical flight simulator to simulate one or more aircraft parameters on the aircraft during the event, the one or more aircraft parameters characterizing a current status of the aircraft or systems thereof during the flight; execute a simulating application to simulate, on the physical flight simulator, the event on the aircraft during the flight; execute the executable code to deploy the one or more scripts and output the one or more aircraft parameters to the physical flight simulator, subject to the one or more aircraft parameters, and receive user input in response to the event thereto; continuously update the one or more aircraft parameters in response to the user input; and output data, including data characterized by the updated one or more aircraft parameters, for analyzing user reaction to the event.

In some examples, the data output by the computer processor may includes a change of a center of gravity of the aircraft during or after the event, the change of the center of gravity of the aircraft being characterized by the updated one or more aircraft parameters.

In some examples, at least one of the one or more aircraft parameters may characterize aerodynamic parameters that simulate an aerodynamic performance of the aircraft during the flight.

In some examples, the computer processor may be configured to: deploy one of the one or more scripts to thereby change the aerodynamic parameters of the aircraft to simulate an impact on the aerodynamic performance, and continuously update the aerodynamic parameters of the aircraft in response to the user input.

In some examples, the aerodynamic parameters may include physical parameters of the aircraft that alter a center of gravity of the aircraft and a simulated condition of: one or both wings of the aircraft, a fuel tank of the aircraft, or a fuselage of the aircraft.

In some examples, the computer processor may be configured to continuously update the aerodynamic parameters includes being configured to update the physical parameters.

In some examples, the computer processor may be configured to output the data includes the computer processor, or another computing device in communication with the apparatus, configured to: compare the data to threshold output data that is characterized by one or more threshold aircraft parameters for the event.

Some other examples provide a computer-readable storage medium for simulating an event on an aircraft during a flight, the computer-readable storage medium being non-transitory and having computer-readable program code stored therein that, in response to execution by a computer processor in communication with a physical flight simulator capable of simulating the flight, causes an apparatus to: access executable code including one or more scripts configured to be deployed on the physical flight simulator to simulate one or more aircraft parameters on the aircraft during the event, the one or more aircraft parameters characterizing a current status of the aircraft or systems thereof during the flight; execute a simulating application to simulate, on the physical flight simulator, the event on the aircraft during the flight; execute the executable code and deploy the one or more scripts to output the one or more aircraft parameters to the physical flight simulator, subject to the one or more aircraft parameters, and receive user input in response to the event thereto; continuously update the one or more aircraft parameters in response to the user input; and output data, including data characterized by the updated one or more aircraft parameters, for analyzing user reaction to the event.

In some examples, the data output by the computer processor may include a change of a center of gravity of the aircraft during or after the event, the change of the center of gravity of the aircraft being characterized by the updated one or more aircraft parameters.

In some examples, at least one of the one or more aircraft parameters may characterize aerodynamic parameters that simulate an aerodynamic performance of the aircraft during the flight.

In some examples, the computer processor may be configured to: deploy one of the one or more scripts to thereby change the aerodynamic parameters of the aircraft to simulate an impact on the aerodynamic performance, and continuously update the aerodynamic parameters of the aircraft in response to the user input.

In some examples, the aerodynamic parameters may include physical parameters of the aircraft that alter a center of gravity of the aircraft and a simulated condition of: one or both wings of the aircraft, a fuel tank of the aircraft, or a fuselage of the aircraft, and wherein the computer processor being configured to continuously update the aerodynamic parameters includes being configured to update the physical parameters.

In some examples, the computer processor may be configured to output the data includes the computer processor, or another computing device in communication with the computer processor, configured to: compare the data to threshold output data that is characterized by one or more threshold aircraft parameters for the event.

These and other features and advantages of the present disclosure will be apparent from a reading of the following detailed description together with the accompanying drawings, which are briefly described below. The present disclosure includes any combination of two, three, four or more features or elements set forth in this disclosure, regardless of whether such features or elements are expressly combined or otherwise recited in a specific example described herein. This disclosure is intended to be read holistically such that any separable features or elements of the disclosure, in any of its examples, should be viewed as combinable, unless the context of the disclosure clearly dictates otherwise.

It will therefore be appreciated that this Brief Summary is provided merely for purposes of summarizing some examples so as to provide a basic understanding of some features of the disclosure. Other examples, features and advantages will become apparent from the following detailed description taken in conjunction with the accompanying drawings which illustrate, by way of example, the principles of some described examples.

### BRIEF DESCRIPTION OF THE SEVERAL VIEWS OF THE DRAWING(S)

Having thus described the disclosure in general terms, reference will now be made to the accompanying drawings, which are not necessarily drawn to scale, and wherein:
FIG. 1 illustrates an example simulation environment, including an apparatus for simulating an event on an aircraft during a flight, and a physical flight simulator;
FIGS. 2A and 2B illustrate, respectively, further details of the apparatus and physical flight simulator illustrated in FIG. 1;
FIGS. 3A- 3C illustrate various example graphical user interfaces (GUI) that are displayed on the physical flight simulator or another display;
FIG. 4 illustrates a flow chart detailing steps of an example method; and
FIG. 5 illustrates an example apparatus for performing the method and other functions described herein.

### DETAILED DESCRIPTION OF THE DISCLOSURE

Some examples of the present disclosure will now be described more fully hereinafter with reference to the accompanying drawings, in which some, but not all features of the disclosure are shown. Indeed, various examples of the disclosure may be embodied in many different forms and should not be construed as limited to the examples set forth herein; rather, these examples are provided so that this disclosure will be thorough and complete, and will fully convey the scope of the disclosure to those skilled in the art. For example, unless otherwise indicated, reference to something as being a first, second or the like should not be construed to imply a particular order. Also, something described as being above something else (unless otherwise indicated) may instead be below, and vice versa; and similarly, something described as being to the left of something else may instead be to the right, and vice versa. Like reference numerals refer to like elements throughout.

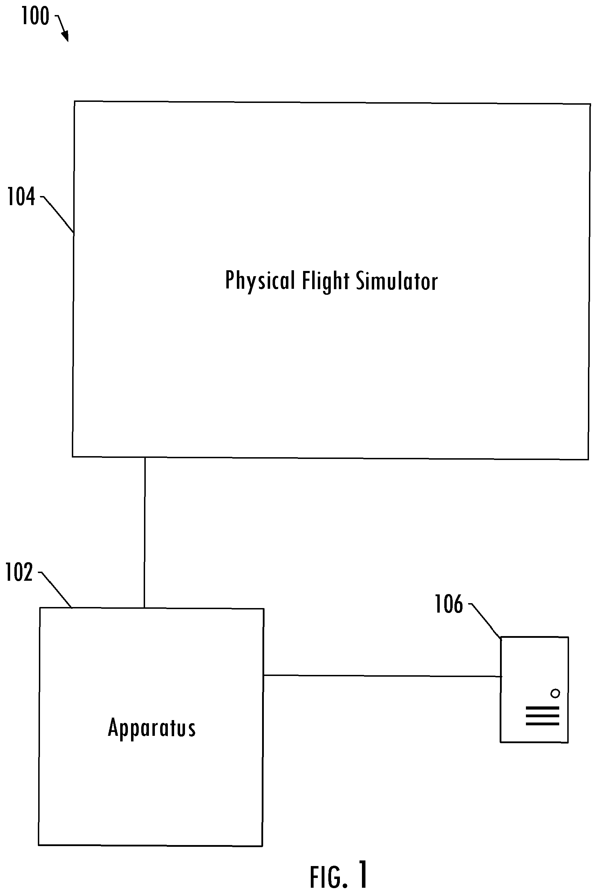

FIG. 1 illustrates an example simulation environment **100** including an apparatus **102** for simulating an event on an aircraft during a flight. The simulation environment also includes a physical flight simulator **104** in communication with the apparatus, the physical flight simulator being capable of simulating the flight and the event on the aircraft. Some example events the physical flight simulator and apparatus are configured to simulate include events (e.g., ballistic impacts) on the fuselage, engine, or wing(s) of the aircraft. For example, an event includes a bird or drone entering the engine of the aircraft causing damage to the engine. Another example event includes debris or ice striking the wing or fuselage of the aircraft causing damage to the wing or fuselage. As described further herein, the event causes an aerodynamic performance of the aircraft to change or a change to a center of gravity of the aircraft. The apparatus is configured to send instructions to the physical flight simulator to simulate or alter a simulation of a particular event, such that the physical flight simulator is configured to simulate the events. The apparatus is configured to generate or access (e.g., from data store **106**) executable code including one or more scripts configured to be deployed on the physical flight simulator to simulate one or more aircraft parameters during the event on the aircraft. The one or more aircraft parameters are sent in the instructions from the apparatus to the physical flight simulator.

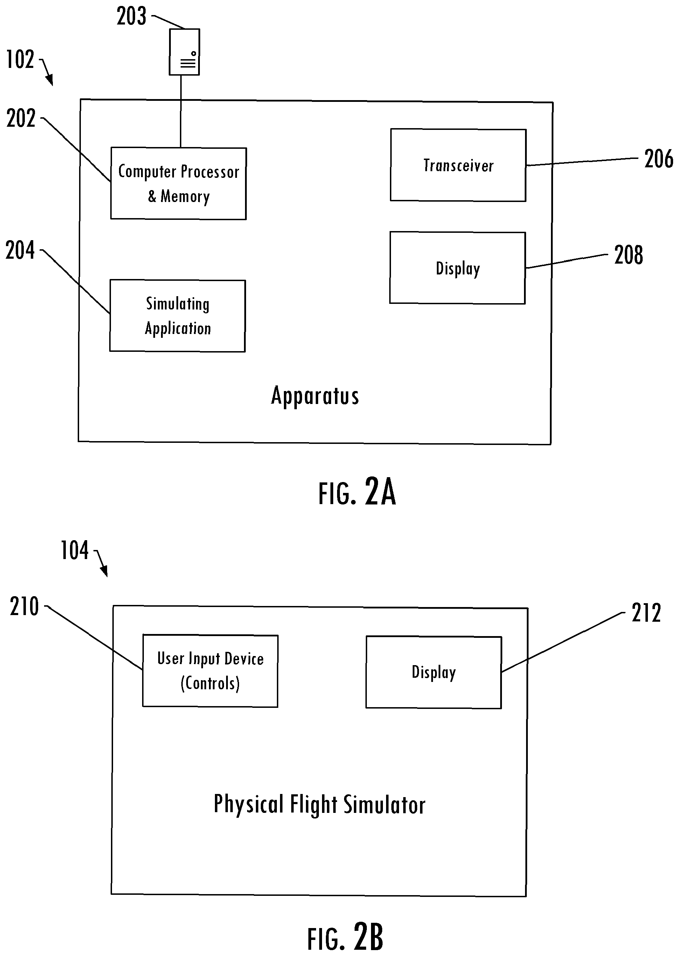

FIGS. 2A and 2B illustrate one example of the apparatus **102** and the physical flight simulator **104** in more detail. The apparatus, as shown in FIG. 2A, comprises a computer processor **202** and memory, configured for generating or accessing the executable code and for executing or performing the features described herein below. That is, when the below description states that the apparatus is configured to perform a function, or the like, the computer processor and memory are completing at least a portion of the function. The apparatus further comprises a simulating application **204,** a transceiver **206,** and a display **208,** each described in further detail below. The physical flight simulator, as shown in FIG. 2B, comprises one or more user input devices **210** (e.g., controls, buttons, etc.) and a display **212,** each of which is described in further detail below.

The one or more aircraft parameters characterize a current status of the aircraft or systems thereof during the flight. The physical flight simulator **104** simulates the flight and event on the aircraft by displaying aircraft parameters to a training pilot, via the display **212** and any other suitable means, using the physical flight simulator or by physically altering various instruments and the user input device **210** in the physical flight simulator (e.g., controls, buttons, switches, yoke, etc.) based on the aircraft parameters. For example, the one or more aircraft parameters include pitch, yaw, and roll data, airspeed data, altitude data, center of gravity data, wing status data, fuel tank and fuel level data, engine status data (e.g., engine failure status, engine power status, etc.), hydraulics status data, crosswind data, altitude at which damage or event occurs, and/or aerodynamic data. The physical flight simulator uses the one or more aircraft parameters (including default aircraft parameters used to start the simulation) to determine what to display to the user/training pilot or how to affect the physical instruments and user input device (e.g., controls) during the simulation. The display of the physical flight simulator further displays an example flight deck of the aircraft being simulated as well as out the window visuals.

The one or more aircraft parameters are configured to be changed naturally by the simulation (e.g., altitude numbers increase as simulation of aircraft take-off occurs, fuel tank level decreases as flight progresses, etc.), but also, the aircraft parameters are configured to be altered by the simulation of the event. That is, if the event being simulated is an engine failure due to a ballistic impact on the engine, the one or more aircraft parameters will be altered by the apparatus **102** to reflect that ballistic impact on the engine and subsequent engine failure. Thereby, the instruments, the user input device **210,** and the display **212** of the physical flight simulator **104** will be altered to reflect the changed one or more aircraft parameters.

As stated above, the executable code includes one or more scripts configured to be deployed on the physical flight simulator **104.** To perform a simulation of the event on the aircraft during the flight, by the physical flight simulator, the apparatus **102** is configured to execute, via the computer processor **202** and memory, a simulating application **204.** Executing the simulating application causes the apparatus to execute the executable code (e.g., stored in the data store) and deploy the one or more scripts. Deploying the one or more scripts outputs the one or more aircraft parameters to the physical flight to simulate, subject to the one or more aircraft parameters, the event on the aircraft. The physical flight simulator receives the one or more aircraft parameters from the apparatus, reads the received one or more aircraft parameters, and simulates the effects of the event on the aircraft by altering the current aircraft parameters of the running simulation based on the received one or more aircraft parameters from the apparatus. In some examples, altering the current aircraft parameters of the running simulation causes the instruments, the display **212,** the user input device **210,** etc., of the physical flight simulator to change or be altered in response to the changed aircraft parameters.

For example, in one scenario simulated by the physical flight simulator **104,** a ballistic impact event occurs to the left engine of the aircraft during take-off, causing catastrophic failure to the left engine. Before the event has been triggered, the display **212** of the physical flight simulator indicates that the left engine is "OPERATIONAL" at 5000 feet (1500 metres). The apparatus **102** executes the simulating application **204** and deploys the scripts on the physical flight simulator to simulate the catastrophic failure of the left engine at 6000 feet (1800 metres). The physical flight simulator receives the one or more aircraft parameters from the deployed script and updates the current aircraft parameters running on the simulation based on the one or more aircraft parameters received from the deployed script. After updating the aircraft parameters, the physical flight simulator displays that the left engine has encountered a "FAILURE" and the elevation is 6000 feet (1800 metres).

As such, in response to the event simulated by the physical flight simulator **104,** the training pilot or user takes some action via the user input device **210.** For example, the training pilot takes the controls and adjusts the simulated aircraft (i.e., further altering the aircraft parameters of the simulated aircraft) in response to the engine failure described above. The training pilot's user input is transmitted by the physical flight simulator to the apparatus **102,** which is configured to receive user input thereto in response to the event.

As the training pilot adjusts the aircraft via the user input device **210,** the apparatus **102** is further configured to continuously update the one or more aircraft parameters in response to the user input by the training pilot. These continuous updates include updates to the one or more aircraft parameters to further the event, resolve the event, and/or to simulate changes to the aircraft to mitigate the consequences of the event. That is, as the training pilot provides user input to the user input device (e.g., moving the yoke in response to the event on the aircraft), the apparatus is configured to continuously update the one or more aircraft parameters sent to the physical flight simulator **104** based on or in response to the user input by the training pilot. To facilitate this functionality, the physical flight simulator is configured to transmit user input made by the training pilot to the apparatus for the apparatus to determine what continuous updates (i.e., including updates to the one or more aircraft parameters) need to be sent to the physical flight simulator in response to the training pilot's actions via the user input device.

In some examples, at least one of the one or more aircraft parameters characterize aerodynamic parameters that simulate an aerodynamic performance of the aircraft during the flight. For example, the aerodynamic parameters include physical parameters of the aircraft defining one or more of a center of gravity of the aircraft, and a simulated condition of: one or both wings of the aircraft, a fuel tank of the aircraft, or a fuselage of the aircraft. As another example, the aerodynamic parameters include physical parameters of the aircraft that alter a center of gravity of the aircraft and a simulated condition of: one or both wings of the aircraft, a fuel tank of the aircraft, or a fuselage of the aircraft. The computer processor **202** of the apparatus **102** is configured to deploy one of the one or more scripts to thereby change the aerodynamic parameters of the aircraft to simulate an impact on the aerodynamic performance (i.e., caused by the event or the user input by the training pilot in response to the event). Additionally, the computer processor of the apparatus is configured to continuously update the aerodynamic parameters, including continuously updating the physical parameters, of the aircraft in response to the user input by the training pilot.

Finally, the apparatus **102** is configured to output data, including data characterized by the updated one or more aircraft parameters, for analyzing user (e.g., training pilot) reaction to the event. The apparatus includes a transceiver **206** from which it transmits and at which it receives data, including transmitting output data, including the data characterized by the updated one or more aircraft parameters. Additionally, the output data is displayed on a display **208** of the apparatus for analyzing user reaction to the event. The data output by the apparatus (i.e., the computer processor **202**) includes, for example, a user response time between deploying one of the one or more scripts and the user input to the physical flight simulator (e.g., user input by the training pilot via the user input device **210**) for analyzing the user reaction to the event.

In some examples, the data output by the computer processor **202** of the apparatus **102** further includes a change of a center of gravity, of the aircraft being simulated, during or after the event, the change of the center of gravity of the aircraft being characterized by the updated one or more aircraft parameters. That is, the one or more aircraft parameter includes data on the center of gravity of the aircraft being simulated, or data from which the center of gravity of the aircraft is determined, and the updated one or more aircraft parameters includes an update that indicates a change of the center of gravity of the aircraft.

In some examples, the computer processor **202** of the apparatus **102** is configured to compare the data to threshold output data that is characterized by one or more threshold aircraft parameters for the event. The computer processor of the apparatus is further configured to perform an analysis. The analysis of the data includes determining whether the data characterized by the updated one or more aircraft parameters is at, above, or below corresponding threshold output data in order to determine whether the user requires further training in handling the event. Alternatively, the computer processor is configured to transmit the data and the updated one or more aircraft parameters to a computing device **203** to compare the data to threshold output data that is characterized by one or more threshold aircraft parameters for the event or to perform the analysis. In other alternative examples, any user or training pilot using the physical flight simulator **104** is provided with interview questions after the completion of the simulation to determine if they felt the flight deck alerted them with enough information and at the right time to be able to react to the event presented to them by the physical flight simulator.

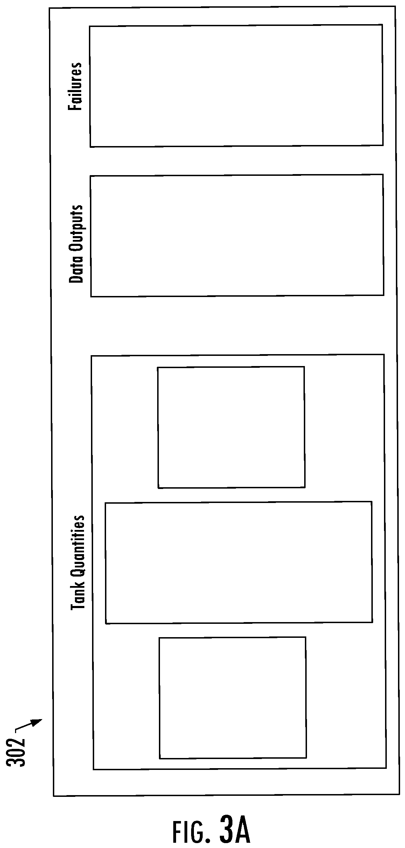

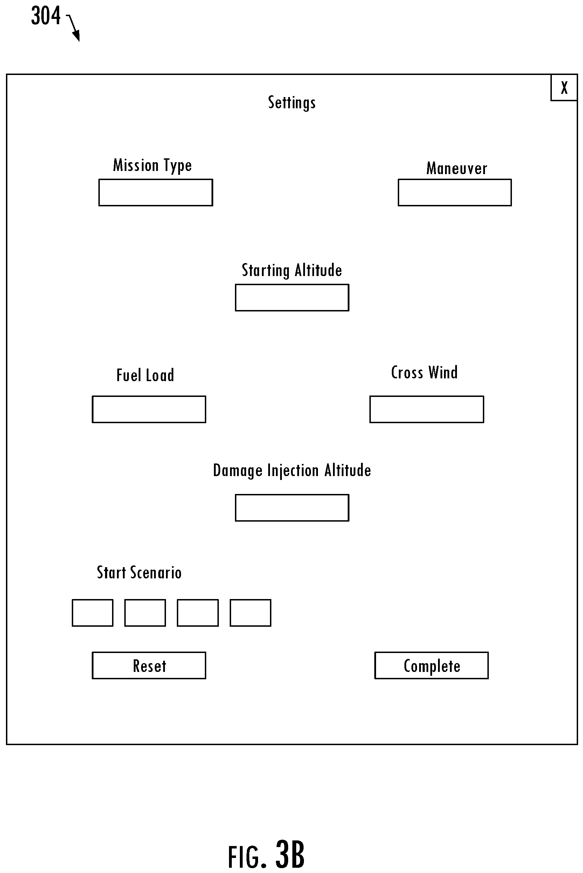

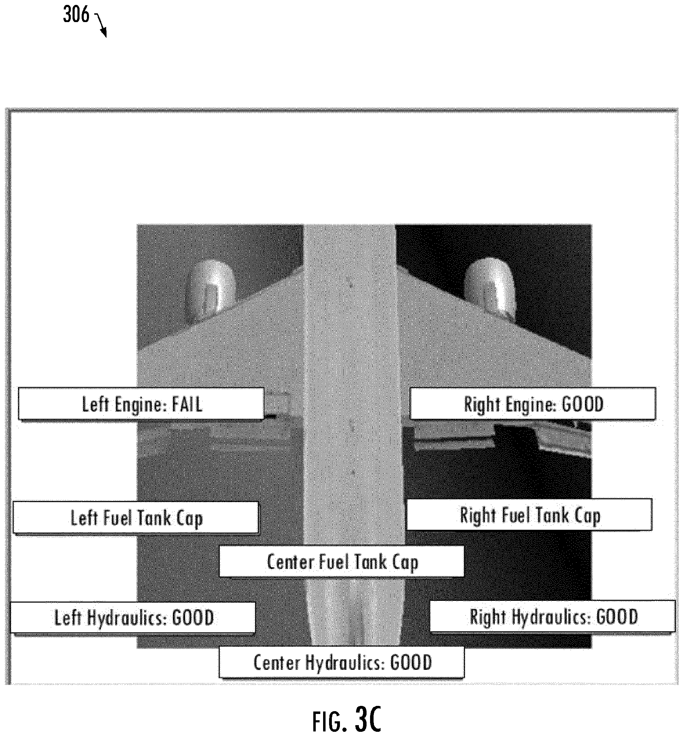

FIGS. 3A-3C illustrate various graphical user interfaces (GUI) that are displayed to a user on the display **208** of the apparatus **102** for a simulation integrator to monitor the scenarios simulated on the physical flight simulator **104.** The first GUI **302,** illustrated in FIG. 3A, details fuel level and failure indicators of various systems of the simulated aircraft. The second GUI **304,** illustrated in FIG. 3B, details an example GUI that is part of a simulating application that the computer processor **202** of the apparatus **102** executes, wherein various aircraft parameters are input to characterize the failure to be simulated. The third GUI **306,** illustrated in FIG. 3C, details parts of an aircraft, including some of the wings and fuselage as well as indicators indicating a status of the engines, fuel tank(s) and various other features of the aircraft. Each of these indicators is updated based on received one or more parameters received by the apparatus, or based on the simulating application that is simulating the aircraft, its flight, user input and/or the event.

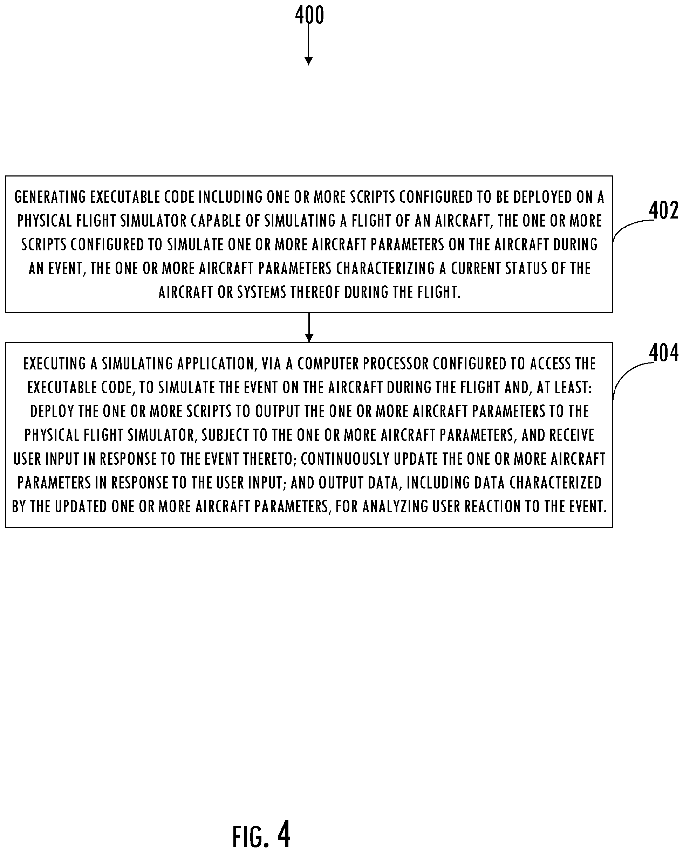

FIG. 4 is a flow chart depicting an example method **400** for simulating an event on an aircraft during a flight using a physical flight simulator capable of simulating the flight and the event on the aircraft, according to some examples of the present disclosure. The method is performed using an apparatus, such as the apparatus **102** from FIGS. 1 and 2A. The method includes generating executable code including one or more scripts configured to be deployed on the physical flight simulator to simulate one or more aircraft parameters on the aircraft during the event, the one or more aircraft parameters characterizing a current status of the aircraft or systems thereof during the flight as shown at block **402.** The method further includes executing a simulating application, via a computer processor configured to access the executable code, to simulate the event on the aircraft during the flight and, at least: deploy the one or more scripts to output the one or more aircraft parameters to the physical flight simulator, subject to the one or more aircraft parameters, and receive user input in response to the event thereto; continuously update the one or more aircraft parameters in response to the user input; and output data, including data characterized by the updated one or more aircraft parameters, for analyzing user reaction to the event as shown at block **404.**

According to examples of the present disclosure, the apparatus **102** is implemented by various means. Means for implementing the apparatus includes hardware, alone or under direction of one or more computer programs from a computer-readable storage medium. In some examples, one or more apparatuses are configured to function as or otherwise implement the apparatus shown and described herein. In examples involving more than one apparatus, the respective apparatuses are connected to or otherwise in communication with one another in a number of different manners, such as directly or indirectly via a wired or wireless network or the like.

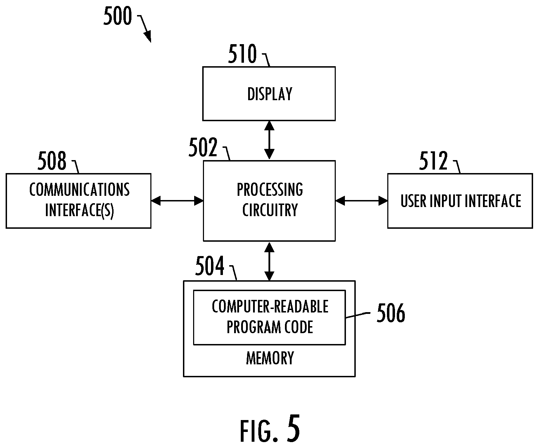

FIG. 5 illustrates an apparatus **500** according to some examples of the present disclosure that is collocated with or separate from the physical flight simulator illustrated in FIG. 2B. The apparatus **500** is an example device that is used to implement the methods and functions described above with respect to the apparatus **102** in FIGS. 1 and 2A. The apparatus is in communication with the computing device **203** shown in FIG. 2A (e.g., a personal computer, server, etc.) and the apparatus performs the method while sending the data to the computing device for comparing the data to the threshold output data as described above. Alternatively, the apparatus performs the method and perform the comparison all in one without having to transmit the data to any other computing device (e.g., such as computing device **203**). Generally, an exemplary apparatus comprises, includes, or is embodied in one or more fixed or portable electronic devices. Examples of suitable electronic devices include a microcontroller, controller, smartphone, tablet computer, laptop computer, desktop computer, workstation computer, server computer or the like. The apparatus includes one or more of each of a number of components such as, for example, processing circuitry **502** (e.g., processor unit or computer processor) connected to a memory **504** (e.g., storage device).

The processing circuitry **502** is composed of one or more processors alone or in combination with one or more memories. The processing circuitry is generally any piece of computer hardware that is capable of processing information such as, for example, data, computer programs and/or other suitable electronic information. The processing circuitry is composed of a collection of electronic circuits some of which is packaged as an integrated circuit or multiple interconnected integrated circuits (an integrated circuit at times more commonly referred to as a "chip"). The processing circuitry is configured to execute computer programs, which are stored onboard the processing circuitry or otherwise stored in the memory **504** (of the same or another apparatus).

The processing circuitry **502** includes a number of processors, a multi-core processor or some other type of processor, depending on the particular implementation. Further, the processing circuitry is implemented using a number of heterogeneous processor systems in which a main processor is present with one or more secondary processors on a single chip. As another illustrative example, the processing circuitry is a symmetric multi-processor system containing multiple processors of the same type. In yet another example, the processing circuitry is embodied as or otherwise include one or more ASICs, FPGAs or the like. Thus, although the processing circuitry is capable of executing a computer program to perform one or more functions, the processing circuitry of various examples is capable of performing one or more functions without the aid of a computer program. In either instance, the processing circuitry is appropriately programmed to perform functions or operations according to examples of the present disclosure.

The memory **504** is generally any piece of computer hardware that is capable of storing information such as, for example, data, computer programs (e.g., computer-readable program code **506**) and/or other suitable information either on a temporary basis and/or a permanent basis. The memory includes volatile and/or non-volatile memory, and is fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks include compact disk - read only memory (CD-ROM), compact disk - read/write (CD-R/W), DVD or the like. In various instances, the memory is referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein generally refer to a computer-readable storage medium or computer-readable transmission medium.

All processing circuitry **502,** memory **504,** computer-readable program code **506,** and other electronic devices discussed above are separate from the physical flight simulator **104,** or collocated with the physical flight simulator. That is, the apparatus **500** of the present disclosure is contained within a housing or on a structure of the physical flight simulator. Alternatively, as illustrated in FIG. 1, the apparatus and physical flight simulator are separate and distinct devices.

In addition to the memory **504,** the processing circuitry **502** is also connected to one or more interfaces for displaying, transmitting and/or receiving information. The interfaces include a communications interface **508** (e.g., communications unit) and/or one or more user interfaces. The communications interface is configured to transmit and/or receive information, such as to and/or from other apparatus(es), network(s) or the like. The communications interface is configured to transmit and/or receive information by physical (wired) and/or wireless communications links. Examples of suitable communication interfaces include a network interface controller (NIC), wireless NIC (WNIC) or the like.

The user interfaces include a display **510** and/or one or more user input interfaces **512** (e.g., input/output unit). The display is configured to present or otherwise display information to a user, suitable examples of which include a liquid crystal display (LCD), light-emitting diode display (LED), plasma display panel (PDP) or the like. The user input interfaces are wired or wireless, and are configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces further include one or more interfaces for communicating with peripherals such as printers, scanners or the like.

As indicated above, program code instructions are stored in memory (e.g., in the switch's memory or in a separate memory), and executed by processing circuitry that is thereby programmed, to implement functions of the systems, subsystems, tools and their respective elements described herein. As will be appreciated, any suitable program code instructions are loaded onto a computer or other programmable apparatus from a computer-readable storage medium to produce a particular machine, such that the particular machine becomes a means for implementing the functions specified herein. These program code instructions are also stored in a computer-readable storage medium that direct a computer, a processing circuitry or other programmable apparatus to function in a particular manner to thereby generate a particular machine or particular article of manufacture. The instructions stored in the computer-readable storage medium produce an article of manufacture, where the article of manufacture becomes a means for implementing functions described herein. The program code instructions are retrieved from a computer-readable storage medium and loaded into a computer, processing circuitry or other programmable apparatus to configure the computer, processing circuitry or other programmable apparatus to execute operations to be performed on or by the computer, processing circuitry or other programmable apparatus.

Retrieval, loading and execution of the program code instructions are performed sequentially such that one instruction is retrieved, loaded and executed at a time. In some examples, retrieval, loading and/or execution are performed in parallel such that multiple instructions are retrieved, loaded, and/or executed together. Execution of the program code instructions produce a computer-implemented process such that the instructions executed by the computer, processing circuitry or other programmable apparatus provide operations for implementing functions described herein.

Execution of instructions by a processing circuitry, or storage of instructions in a computer-readable storage medium, supports combinations of operations for performing the specified functions. In this manner, the apparatus **500** includes the processing circuitry **502** and the computer-readable storage medium or memory **504** coupled to the processing circuitry, where the processing circuitry is configured to execute computer-readable program code **506** stored in the memory. It will also be understood that one or more functions, and combinations of functions, are implemented by special purpose hardware-based computer systems and/or processing circuitry which perform the specified functions, or combinations of special purpose hardware and program code instructions.

Many modifications and other examples will come to mind to one skilled in the art to which these disclosed examples pertain having the benefit of the teachings presented in the foregoing descriptions and the associated drawings. Therefore, it is to be understood that examples are not to be limited only to the specific examples disclosed and that modifications and other examples are intended to be included within the scope of the claims. Moreover, although the foregoing descriptions and the associated drawings describe examples in the context of certain example combinations of elements and/or functions, it should be appreciated that different combinations of elements and/or functions may be provided by alternative examples without departing from the scope of the claims. In this regard, for example, different combinations of elements and/or functions than those explicitly described above are also contemplated . Although specific terms are employed herein, they are used in a generic and descriptive sense only and not for purposes of limitation.

It should be understood that although the terms first, second, etc. may be used herein to describe various steps or calculations, these steps or calculations should not be limited by these terms. These terms are only used to distinguish one operation or calculation from another. For example, a first calculation may be termed a second calculation, and, similarly, a second step may be termed a first step, without departing from the scope of this disclosure. As used herein, the term "and/or" and the "/" symbol includes any and all combinations of one or more of the associated listed items.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular examples only and is not intended to be limiting.

## Claims

1. A method (400) for simulating an event on an aircraft during a flight using a physical flight simulator (104) capable of simulating the flight and the event on the aircraft, the method (400) comprising:
generating (402) executable code including one or more scripts configured to be deployed on the physical flight simulator (104) to simulate one or more aircraft parameters on the aircraft during the event, the one or more aircraft parameters characterizing a current status of the aircraft or systems thereof during the flight; and
executing (404) a simulating application (204), via a computer processor (202) configured to access executable code, wherein
the executable code includes one or more scripts configured to be deployed on the physical flight simulator (104) to simulate one or more aircraft parameters on the aircraft during the event, the one or more aircraft parameters characterizing a current status of the aircraft or systems thereof during the flight, and
in executing (404) the simulating application (204), the computer processor (202) simulates the event on the aircraft during the flight and, at least:
deploys the one or more scripts to output the one or more aircraft parameters to the physical flight simulator (104), subject to the one or more aircraft parameters, and receive user input in response to the event thereto;
continuously updates the one or more aircraft parameters in response to the user input; and
outputs data, including data **characterized by** the updated one or more aircraft parameters, for analyzing user reaction to the event.

2. The method (400) of claim 1, further comprising generating (402) the executable code that includes the one or more scripts.

3. The method (400) of claim 1 or 2, wherein the data **characterized by** the updated one or more aircraft parameters include a change of a center of gravity of the aircraft during or after the event, the change of the center of gravity of the aircraft being **characterized by** the updated one or more aircraft parameters.

4. The method (400) of any of claims 1 to 3, wherein at least one of the one or more aircraft parameters characterize aerodynamic parameters that simulate an aerodynamic performance of the aircraft during the flight.

5. The method (400) of claim 4, comprising executing (404) the simulating application (204), via the computer processor (202) configured to access the executable code, such that the computer processor (202):
deploys one of the one or more scripts to thereby change the aerodynamic parameters of the aircraft to simulate an impact on the aerodynamic performance, and
continuously updates the aerodynamic parameters of the aircraft in response to the user input.

6. The method (400) of claim 5, wherein the aerodynamic parameters include physical parameters of the aircraft that alter a center of gravity of the aircraft and a simulated condition of: one or both wings of the aircraft, a fuel tank of the aircraft, or a fuselage of the aircraft.

7. The method (400) of claim 6, wherein executing (404) the simulating application (204), via the computer processor (202) configured to access the executable code, such that the computer processor (202) continuously updates the aerodynamic parameters includes the computer processor (202) updating the physical parameters.

8. The method (400) of any of claims 1 to 7, wherein executing (404) the simulating application (204), via the computer processor (202) configured to access the executable code, such that the computer processor (202) continuously updates the aerodynamic parameters includes comparing, by the computer processor (202) or another computing device to which the computer processor (202) is in communication with, the data to threshold output data that is **characterized by** one or more threshold aircraft parameters for the event.

9. The method (400) of any of claims 1 to 8, wherein the event is a ballistic impact on the aircraft.

10. The method (400) of claim 9, wherein the event is a ballistic impact on an engine of the aircraft.

11. The method (400) of claim 10, wherein the event is a bird or drone entering the engine of the aircraft thereby damaging the engine.

12. The method (400) of claim 9, wherein the event is a ballistic impact on s fuselage or wing of the aircraft.

13. The method of claim 12, wherein the event is debris or ice striking the fuselage or wing.

14. An apparatus (102) for simulating an event on an aircraft during a flight, the apparatus (102) in communication with a physical flight simulator (104) capable of simulating the flight, the apparatus (102) comprising a computer processor (202) and a memory, the computer processor (202) being configured to perform the method of any of claims 1 to 13.

15. A computer program comprising computer program instructions that, when executed by a computer processor (202), cause the computer processor (202) to perform the method of any of claims 1 to 13, or a computer-readable storage medium (506) having stored thereon such a computer program.
